(19) Europäisches Patentamt
European Patent Office
Office européen des brevets

(11) EP 1 480 862 B1

(12) # EUROPÄISCHE PATENTSCHRIFT

(45) Veröffentlichungstag und Bekanntmachung des Hinweises auf die Patenterteilung:
**13.07.2011 Patentblatt 2011/28**

(21) Anmeldenummer: **03717196.4**

(22) Anmeldetag: **26.02.2003**

(51) Int Cl.:
***B60T 8/36*** *(2006.01)* ***H01H 47/32*** *(2006.01)*

(86) Internationale Anmeldenummer:
**PCT/EP2003/001944**

(87) Internationale Veröffentlichungsnummer:
**WO 2003/074338 (12.09.2003 Gazette 2003/37)**

(54) **VERFAHREN UND SCHALTUNGSANORDNUNG ZUR KALIBRIERUNG VON SPANNUNGS- UND TEMPERATURABWEICHUNGEN DES EFFEKTIVSTROMS VON HYDRAULIKVENTILEN IN EINER PWM-ANSTEUERUNG**

METHOD AND CIRCUIT SYSTEM FOR CALIBRATING VOLTAGE AND TEMPERATURE DEVIATIONS OF THE EFFECTIVE CURRENT OF HYDRAULIC VALVES IN A PWM DRIVE

PROCEDE ET ENSEMBLE CIRCUIT PERMETTANT DE CALIBRER DES ECARTS DE TENSION ET DE TEMPERATURE DE L'INTENSITE EFFICACE DE SOUPAPES HYDRAULIQUES DANS UNE COMMANDE A MODULATION DE LARGEUR D'IMPULSION

(84) Benannte Vertragsstaaten:
**DE FR IT**

(30) Priorität: **01.03.2002 DE 10208832**

(43) Veröffentlichungstag der Anmeldung:
**01.12.2004 Patentblatt 2004/49**

(73) Patentinhaber: **Continental Teves AG & Co. oHG**
**60488 Frankfurt am Main (DE)**

(72) Erfinder:
- **ENGELMANN, Mario**
  **61449 Steinbach/Ts. (DE)**
- **OEHLER, Peter**
  **65929 Frankfurt-Höchst (DE)**

(56) Entgegenhaltungen:
**EP-A- 0 636 869** **EP-A- 0 641 700**
**EP-A- 0 779 631** **EP-A- 1 065 678**
**DE-A- 3 729 183** **DE-A- 4 241 121**
**DE-A- 19 727 765**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 480 862 B1

Printed by Jouve, 75001 PARIS (FR)

## Beschreibung

Die Erfindung betrifft ein Verfahren und eine Schaltungsanordnung zur Kalibrierung von Spannungs- und Temperaturabweichungen des Effektivstroms von Hydraulikventilen in einer PWM-Ansteuerung gemäß den Oberbegriffen der Ansprüche 1, 11 und 12.

Es ist bekannt, dass bei einer Ventilansteuerung mittels pulsweitenmoduliertem Strom (PWM-Stromregelung), zumindestens wenn das Verhältnis zwischen PWM-Frequenz und der Zeitkonstanten der Spule ungünstig ist, signifikante Unterschiede zwischen dem eingeregelten Sollstrom und dem Effektivstrom in der Spule auftreten. Es ist außerdem bekannt, dass Abhängigkeiten von äußeren Parametern, wie Versorgungsspannung und Temperatur, existieren.

In der Schrift EP 0 779 631 A2 wird ein Verfahren offenbart zur pulsweitenmodulierten Stromsteuerung einer induktiven Last, in welchem der Duty Cycle (Drive Duty) des Pulssignals des Pulsgenerators berechnet wird.

Die Schrift EP 1 065 678 A1 offenbart ein Magnetventilsteuergerät, bei welchem zur Bewegung des Ventilstößels eine pulsbreitenmodulierte Spannungsversorgung der Spule durchgeführt wird.

Ein Verfahren zur Steuerung einer magnetischen Bremse wird in der Schrift EP 0 641 700 A1 beschrieben, bei welchem der Spulenstrom eines Elektromagneten zu einem gewissen Zeitpunkt gemessen wird und eine Anpassung des Spulenstroms in Abhängigkeit von der Temperatur durchgeführt wird.

Zum Beispiel fließt durch eine dauerhaft eingeschaltete induktive Last (z. B. Ventilspule) der (maximal mögliche) Strom

$$I_{100\%} = V_{REFx} / (R_L + R_{DSon\text{-}LS}) . \qquad (1)$$

Dieser Strom hängt demnach ab

- von der Spannung an der oberen Seite des Ventils, und somit indirekt von der im Kraftfahrzeug verfügbaren Batteriespannung an Klemme KL30B,
- vom Spulenwiderstand $R_L$ sowie (in geringerem Maße) von dem *on*-Widerstand $R_{DSon\text{-}LS}$ des/der Halbleiterbauelements/-e, welche zur Ansteuerung der Last/-en eingesetzt werden. Beide Widerstände sind stark temperaturabhängig: Veränderungen von etwa 0,4 % pro 1 °C für den Lastwiderstand (das ist z. B. der TemperaturKoeffizient für Kupfer, reale Spulen haben eine etwas geringere Abhängigkeit) und 0,5 % pro 1 °C für $R_{DSon\text{-}LS}$ (z. B. Power-MOSFESTs, realisiert auf einem Chip) sind typische Werte.

Aufgabe der Erfindung ist es, ein Verfahren und eine Schaltungsanordnung zum Treiben von Lasten anzugeben, welches Abweichungen von dem Sollstrom und dem in der Last fließenden Effektivstrom verringert.

Diese Aufgabe wird gelöst durch das Verfahren gemäß Anspruch 1 und die Schaltungsanordnung gemäß den Ansprüchen 11 und 12.

Unter einem Ausgleichswert nach der Erfindung wird ein Kompensationsstrom $\Delta I$ verstanden, welcher sowohl positive als auch negative Zahlenwerte annehmen kann.

Bei dem erfindungsgemäßen Verfahren zur Verringerung von Abweichungen zwischen dem Effektivstrom $I_{RMS}$ und dem gemessenen Strom $I_{mess}$ in einer pulsweitenmodulierten Stromregelung ist es bevorzugt, den gemessenen Strom $I_{mess}$ bei der Hälfte der Einschaltzeit $t_{on}$ innerhalb einer Ansteuerperiode $t_{PWM}$ zu bestimmen.

Bevorzugt wird die Versorgungsspannungsabhängigkeit dadurch kompensiert, dass aus bestimmten diskreten Stützpunkten eine ventilspezifische Tabelle extrahiert wird, wobei besonders bevorzugt die diskreten Stützpunkte aus Wertepaaren, gebildet aus dem Sollstrom $I_{soll}$ und der Versorgungsspannung $V_{KL30B}$, bestehen. Weiterhin bevorzugt werden Werte, welche zwischen den diskreten Stützpunkten liegen, durch Interpolation ermittelt.

Vorteilhafterweise wird die ventilspezifische Tabelle in einem Datenspeicher abgelegt, wobei es sich bevorzugt um einen nichtflüchtigen Datenspeicher handelt, welcher seine Daten auch nach dem Abschalten der Zündung behält.

Es ist bevorzugt, dass die Ausgleichswerte für jede Last, insbesondere für jede Ventilspule, separat festgelegt, bzw. in einer Tabelle gespeichert sind.

Weitere bevorzugte Ausführungsformen ergeben sich aus den Unteransprüchen und der nachfolgenden Beschreibung eines Ausführungsbeispiels an Hand von Figuren.

Es zeigen

Fig. 1 den Unterschied von Strommessung bei PWM- Ansteuerung zum mittleren Strom und dem Effektiv- strom,

Fig. 2 zeigt die Differenz des gemessenen Stroms zum Ef- fektivstrom für ein typisches Hydraulikventil, und

Fig. 3 die Differenz des gemessenen Stroms zum Effektiv- strom für ein typisches Hydraulikventil relativ zur Differenz, die bei einer Versorgungsspannung von 12 V und einer Temperatur von 25 °C vorhanden ist.

In Fig. 1 ist der Stromverlauf an einer Ventilspule über der Zeit t aufgetragen. Bei einer Stromregelung mittels PWM-Ansteuerung stellt sich ein mittlerer Strom

$$I_{AVG} = DC * I_{100\%} = DC * V_{REFx}/(R_L + R_{DSon-LS}) \quad (2)$$

ein, wobei DC das Tastverhältnis (*Duty Cycle*) der PWM-Ansteuerung angibt. Die Funktionsweise einer erfindungsgemäß einsetzbaren PWM-Regelung wurde bereits in der Internationalen Patentanmeldung WO02/058967 A1 beschrieben. Die Gleichheit gilt streng genommen nur bei einer Ansteuerung mittels Geraden 1 oder mit idealen e-Funktionen.

Für eine Stromregelung muss der aktuelle Spulenstrom bei einer bestimmten Zeit, dargestellt durch das Symbol @ ("at"), z. B. bei der Hälfte der Einschaltzeit $t_{on}$ gemessen werden. Der Regler stellt demnach einen gemessenen Strom $I_{mess}$ von

$$I_{mess} = I(@\ t_{on}/2) = I_{soll} \quad (3)$$

ein. Der gemessene Strom $I_{mess}$ entspricht dem mittleren Strom $I_{AVG}$ nur bei Ansteuerung durch Geraden. Bei einer Ansteuerung mit idealen e-Funktionen (entspricht einer Spule ohne Eisenkern) ist der zum Zeitpunkt $t_{on}/2$ gemessene Strom $I_{mess}$ höher, als der mittlere Strom $I_{AVG}$. Bei einer Stromregelung eines Ventils ist jedoch letztlich der Effektivstrom $I_{RMS}$ von Interesse, der noch etwas niedriger liegt als der mittlere Strom $I_{AVG}$. Bei einem Ventil, welches vereinfacht als Spule mit einem Eisenkern dargestellt werden kann, kommt es zusätzlich zu Sättigungseffekten (Hysterese), wodurch sich Nichtlinearitäten ergeben, wie aus dem Verlauf der Stromkurve 2 deutlich wird. Hieraus resultiert eine weitere Abweichung zwischen dem Effektivstrom $I_{RMS}$ und dem gemessenen Strom $I_{mess}$. Es gilt also näherungsweise

$$I_{soll} = I_{AVG} = DC * V_{REFx}/(R_L + R_{DSon-LS}). \quad (4)$$

Diese Gleichung ist umso genauer, je höher die PWM-Frequenz liegt.

Fig. 2 zeigt die Differenz zwischen dem gemessenen Strom $I_{mess}$ und dem Effektivstrom $I_{RMS}$ für das elektromagnetische Ventil eines elektronischen Bremsensteuergerätes, aufgetragen über den Sollstrom $I_{soll}$, für verschiedene Spannungen an KL30B und verschiedene Spulentemperaturen. Mit wachsendem Sollstrom $I_{soll}$ nimmt die Differenz ab: Dies resultiert daraus, dass der Stromregler beginnt, in die Sättigung zu gelangen (d. h. der *Duty Cycle* beträgt etwa 100 %).

Eine erste Kompensation ist noch relativ einfach, um nämlich die Abhängigkeit vom Sollstrom $I_{soll}$ zu eliminieren. Für einen bestimmten Sollstrom $I_{soll}$ wird eine dem Diagramm zu entnehmende Stromdifferenz hinzuaddiert. Dies gelingt nur für eine bestimmte Spannung und eine bestimmte Temperatur. Beispiel: Sollwert-Kompensation bei $V_{KL30B}$ = 12 V und T = 25 °C (Kurve 3). Um einen Effektivstrom $I_{RMS}$ = 1 A zu erreichen wird ein Sollstrom $I_{soll}$ = 1 A + 62,5 mA vorgegeben.

Fig. 3: Um Abhängigkeiten von der Spannung und der Temperatur zu erfassen, ist es sinnvoll, die Abweichung der Kurven aus Fig. 2 von einer Referenzkurve (bei $V_{KL30B}$ = 12 V und T = 25 °C) darzustellen (siehe Abbildung 3). Man erkennt, dass bei z. B. einem Sollstrom $I_{soll}$ = 1,1 A eine maximale Spannungsabhängigkeit von -37,5 mA / +29 mA bei einer Spannungsvariation von etwa 9 V bis etwa 16,5 V über einer konstanten Temperatur von 25 °C herrscht. Umgekehrt kann man bei einer Temperaturvariation von etwa -40 °C bis etwa 180 °C über eine konstante Spannung von 12 V eine maximale Temperaturabhängigkeit von +10,5 mA/-25,5 mA bei einem Sollstrom $I_{soll}$ = 1,1 A ablesen. Diese beiden Abhängigkeiten addieren sich nicht einfach linear, denn in den beiden Eckpunkten {17 V, - 40 °C} und {9 V, 180 °C} werden für 1,1 A lediglich Abweichungen von +30,5 mA/-49,5 mA erreicht. Der Einfluss der Spannung ist aber signifikant größer als der der Temperatur.

Aus Fig. 3 wird für eine Kompensation der Spannungsabhängigkeit eine (ventilspezifische) Tabelle erzeugt. Hierzu werden bestimmte diskrete Stützpunkte verwendet, welche jeweils aus einem Wertepaar {$I_{soll}$, $V_{KL30B}$} bestehen, wobei zu jedem Wertepaar {$I_{soll}$, $V_{KL30B}$} jeweils ein Kompensationsstrom ΔI zur Sollwert-Anpassung abgelegt wird.

Zwischenwerte werden durch Interpolation ermittelt. Es soll z. B. eine Erhöhung des Sollstromes $I_{soll}$ von 200 mA auf 1000 mA bei einer Spannung von 9 V am Ventil und einer Temperatur von 180° C, entspricht der Kurve 19 in Fig. 3, erfolgen. Um den Sollstrom $I_{soll}$ = 1000 mA zu erreichen, wird ein Kompensationsstrom $\Delta I$ = -45 mA zu dem Sollstrom $I_{soll}$ = 1000 mA hinzuaddiert. Da das Ventil aber, aufgrund seiner Zeitkonstanten, der Vorgabe des Sollstroms verzögert folgt, wird zur Kompensation anfangs nur ein Kompensationsstrom $\Delta I$ = -10 mA vorgegeben. Dies entspricht der Stromkompensation bei $I_{soll}$ = 200 mA. Hierdurch wird der Stromverlauf am Ventil dem Verlauf der Kurve 19 angepasst. Weiterhin wird der Kompensationsstrom $\Delta I$ entsprechend dem Verlauf der Kurve 19 bis zum Erreichen des Sollstroms $I_{soll}$ = 1000 mA nachgeführt.

Um Schwankungen bzw. Sprünge der Versorgungsspannung (z. B. an KL30B) auszugleichen, ist es bevorzugt eine Mittelung über die aktuelle Spannungsmessung und vergangene Werte durchzuführen.

Zur Kompensation der Temperaturabhängigkeit erfolgt eine indirekte Erfassung der Temperatur über den von der Stromregelung eingestellten *Duty Cycle.* Aus Gleichung (4) folgt

$$R_L + R_{DSon-LS} = (DC * V_{REFx})/I_{soll}. \quad (5)$$

Diese Formel besagt, dass für den aktuellen *Duty Cycle* letztlich nur der Spulenwiderstand $R_L$ (und der *on*-Widerstand $R_{DSon-LS}$) verantwortlich ist; die Spulentemperatur erscheint nur indirekt. Deshalb ist es zunächst sinnvoll, die Daten aus Abbildung 3 in eine Abhängigkeit des Spulenwiderstandes $R_L$ (und des *on*-Widerstandes $R_{Dson-LS}$) umzurechnen:

$$R_L(T) = R_L(@\ T_{Bezug})*(1 + \alpha_{Spule} * (T_{aktuell} - T_{Bezug}))\ \text{bzw.}$$

$$R_{DSon-LS}(T) = R_{DSon-LS}(@T_{Bezug})*(1 + \alpha_{Ron} * (T_{aktuell} - T_{Bezug})). \quad (6)$$

In Gleichung (6) werden die temperaturabhängigen Werte des Spulenwiderstandes $R_L$ (T) und des *on*-Widerstandes $R_{DSon-LS}$ (T) unter Berücksichtigung bekannter Widerstandswerte $R_L(@T_{Bezug})$, $R_{DSon-LS}$ $(@T_{Bezug})$ bei einer Bezugstemperatur $T_{Bezug}$ bestimmt. Hierzu werden die bekannten Widerstandswerte $R_L(@T_{Bezug})$, $R_{DSon-LS}(@T_{Bezug})$ mit Korrekturfaktoren multipliziert. Diese Korrekturfaktoren setzen sich im wesentlichen aus Temperaturkoeffizienten ($\alpha_{Spule}$, $\alpha_{Ron}$) und einer Temperaturdifferenz zwischen der aktuellen Temperatur $T_{aktuell}$, welche aus dem aktuellen *Duty Cycle* ermittelt wird, und der Bezugstemperatur $T_{Bezug}$ zusammen. Hierbei beschreibt $\alpha_{Spule}$ die Temperaturabhängigkeit des verwendeten Spulenmaterials und $\alpha_{Ron}$ die Temperaturabhängigkeit des *on*-Widerstandes $R_{Dson-LS}$. Der *on*-Widerstand $R_{DSon-LS}$ stellt den parasitären Widerstand eines Schalters dar, wobei dieser Schalter in Form eines, auf einem Halbleiterchip realisierten, MOSFET-Transistor verwirklicht ist. Es ist auch möglich, diese benötigte Schaltfunktion auf andere Weise, z. B. Relais-, Bipolar-Technik etc., zu erzielen. Die Abhängigkeit auf $R_L$ + $R_{Dson-LS}$ und nicht auf die Temperatur zu beziehen hat außerdem den Vorteil, dass unterschiedliche Temperaturen im Ventil und im Halbleiterchip richtig erfasst werden, da im aktuellen *Duty Cycle* diese unterschiedlichen Temperaturen implizit enthalten sind.

In einer Tabelle wird wiederum für Wertepaare {$I_{soll}$, $R_L$ + $R_{DSon-LS}$} jeweils ein $\Delta I$ zur Sollwert-Anpassung abgelegt. Hier ist eine zusätzliche Kalibrierung sinnvoll, da Gleichung (4) nur näherungsweise gilt. Es bietet sich an, den *Duty Cycle* bei einem konkreten Ventil und Referenzwerten (z. B. $I_{soll}$ = 1 A, Temp. = 25 °C, $V_{KL30B}$ = 12 V) zu messen und die Tabelle mittels eines entsprechenden Offsets umzurechnen.

## Patentansprüche

1. Verfahren, mit welchem Abweichungen zwischen dem Effektivstrom ($I_{RMS}$) und dem vorgegebenen Sollstrom in einer pulsweitenmodulierten Stromregelung eines Ventils, in welcher der Strom ($I_{mess}$) zu einem bestimmten vorgegebenen Zeitpunkt innerhalb einer Ansteuerperiode ($t_{PWM}$) gemessen wird, verringert werden, insbesondere für elektronische Kraftfahrzeugbremsensteuergeräte, **dadurch gekennzeichnet, dass** eine Kompensation durch temperaturabhängige und versorgungsspannungsabhängige Ausgleichswerte erfolgt, welche zum gemessenen Strom ($I_{mess}$) hinzuaddiert werden, und dass der so erhaltene Stromwert als korrigierter Sollstrom ($I_{soll}$) für die Stromregelung herangezogen wird.

2. Verfahren nach Anspruch 1, **dadurch gekennzeichnet, dass** die Versorgungsspannungsabhängigkeit kompensiert wird.

3. Verfahren nach Anspruch 1 oder 2, **dadurch gekennzeichnet, dass** die Ausgleichswerte tabellarisch, insbesondere in einem Datenspeicher, abgelegt sind.

4. Verfahren nach mindestens einem der vorherigen Ansprüche, **dadurch gekennzeichnet, dass** mehrere Lasten angesteuert werden und die Ausgleichswerte individuell für jede Last, insbesondere für jede Ventilspule, festgelegt sind.

5. Verfahren nach einem der Ansprüche 3 oder 4, **dadurch gekennzeichnet, dass** für Temperaturen und/oder Versorgungsspannungen, welche zwischen zwei Tabellenwerten liegen, zur Ermittlung des optimalen Ausgleichswertes eine Interpolation durchgeführt wird.

6. Verfahren nach mindestens einem der vorherigen Ansprüche, **dadurch gekennzeichnet, dass** eine Mittelung über den aktuellen Sollwert und vergangene Sollwerte vorgenommen wird, um Sollwertsprünge auszugleichen.

7. Verfahren nach mindestens einem der vorherigen Ansprüche, **dadurch gekennzeichnet, dass** die Temperatur indirekt über den von der Stromregelung eingestellten Duty Cycle ermittelt wird.

8. Verfahren nach Anspruch 7, **dadurch gekennzeichnet, dass** zur Temperaturermittlung die Summe ($R_{AVG}$) aus Spulenwiderstand ($R_L$) und Widerstand des angeschalteten Halbleiterbauelements zum Treiben der Last ($R_{DSon\text{-}LS}$) herangezogen wird.

9. Verfahren nach Anspruch 7 oder 8, **dadurch gekennzeichnet, dass** für die Temperaturmessung bzw. die Ermittlung des indirekten Temperaturwertes die Duty Cycles mehrerer PWM-Perioden ($t_{PWM}$) gemittelt werden.

10. Verfahren nach mindestens einem der Ansprüche 7 bis 9, **dadurch gekennzeichnet, dass** unmittelbar nach dem Einschalten, insbesondere nach Zündungsneustart, für den Mittelwert der indirekt ermittelten Temperaturgröße ($R_{AVG}$) der nominale Widerstandswert der Spule bei der aktuell gemessenen oder geschätzten Steuergerätatemperatur verwendet wird.

11. Schaltungsanordnung zum Ansteuern von mehreren induktiven Lasten umfassend eine Schaltung zur PWM-Regelung des
Laststroms; **dadurch gekennzeichnet, dass** das Verfahren gemäß mindestens einem der Ansprüche 1 bis 10 als Programm in einem Mikrorechner oder Mikrorechnersystem ausgeführt wird, welcher/welches mit dem PWM-Schaltung elektrisch verbunden ist.

12. Schaltungsanordnung zum Ansteuern von mehreren induktiven Lasten umfassend eine Schaltung zur PWM-Regelung des Laststroms, insbesondere nach Anspruch 11, **dadurch gekennzeichnet, dass** das Verfahren gemäß mindestens einem der Ansprüche 1 bis 10 zumindest zum Teil durch digitale Logik realisiert ist.

## Claims

1. Method, by means of which discrepancies between the root means square current ($I_{RMS}$) and the predetermined nominal current in pulse-width-modulated closed-loop current control of a valve are reduced, in which closed-loop control the current ($I_{meas}$) is measured at a specific predetermined time within a control period ($t_{PWM}$) in particular for electronic motor vehicle brake controllers, **characterized in that** compensation is provided by temperature-dependent and supply-voltage-dependent compensation values which are added to the measured current ($I_{meas}$) and **in that** the current value obtained in this way is used as a corrected nominal current ($I_{nom}$) for closed-loop current control.

2. Method according to Claim 1, **characterized in that** the supply voltage dependency is compensated for.

3. Method according to Claim 1 or 2, **characterized in that** the compensation values are stored in tabular form, in particular in a data memory.

4. Method according to at least one of the preceding claims, **characterized in that** a plurality of loads are controlled, and the compensation values are defined individually for each load, in particular for each valve core.

5. Method according to one of Claims 3 or 4, **characterized in that** interpolation is carried out to determine the optimum compensation value for temperature and/or supply voltages which are between table values.

6. Method according to at least one of the preceding claims, **characterized in that** averaging is carried over the instantaneous nominal value and previous nominal values in order to compensate for sudden nominal value changes.

7. Method according to at least one of the preceding claims, **characterized in that** the temperature is determined indirectly by means of the duty cycle which is set by the closed-loop current control.

8. Method according to Claim 7, **characterized in that** the temperature is determined from the sun ($R_{AVG}$) of the coil resistance ($R_L$) and the resistance of the connected semiconductor component for driving the load ($R_{DSon\text{-}LS}$).

9. Method according to Claim 7 or 8, **characterized in that** the duty cycles are averaged over a plurality of PWM periods ($t_{PWM}$) for the temperature measurement and for determination of the indirect temperature value.

10. Method according to at least one of Claims 7 to 9, **characterized in that** immediately after switching on, and in particular after restarting the ignition, the nominal resistance value of the coils at the instantaneous measured or estimated controller temperature is used for the mean value of the indirectly determined temperature variable ($R_{AVG}$).

11. Circuit arrangement for controlling a plurality of inductive loads, comprising a circuit for closed-loop PWM control of the load current, **characterized in that** the method according to at least one of Claims 1 to 10 is run as a program in a microcomputer or microcomputer system which is electrically connected to the PWM circuit.

12. Circuit arrangement for controlling a plurality of inductive loads, comprising a circuit for closed-loop PWM control of the load current, in particular according to Claim 11, **characterized in that** the method according to at least one of Claims 1 to 10 is implemented at least partially by digital logic.

**Revendications**

1. Procédé avec lequel sont réduits les écarts entre le courant effectif ($I_{RMS}$) et le courant de consigne prédéfini dans un régulateur de courant à modulation d'impulsions en largeur d'une vanne, dans lequel le courant ($I_{mess}$) est mesuré à un instant prédéfini donné à l'intérieur d'une période d'excitation ($t_{PWM}$), notamment pour des contrôleurs de frein de véhicule automobile, **caractérisé en ce qu'**une compensation est effectuée par des valeurs de compensation dépendantes de la température et dépendantes de la tension d'alimentation, lesquelles sont additionnées au courant mesuré ($I_{mess}$), et **en ce que** la valeur du courant ainsi obtenue est utilisée comme courant de consigne corrigé ($I_{soll}$) pour le régulateur de courant.

2. Procédé selon la revendication 1, **caractérisé en ce que** la dépendance à la tension d'alimentation est compensée.

3. Procédé selon la revendication 1 ou 2, **caractérisé en ce que** les valeurs de compensation sont enregistrées sous la forme d'un tableau, notamment dans une mémoire de données.

4. Procédé selon au moins l'une des revendications précédentes, **caractérisé en ce que** plusieurs charges sont commandées et les valeurs de compensation sont définies individuellement pour chaque charge, notamment pour chaque bobine de vanne.

5. Procédé selon l'une des revendications 3 ou 4, **caractérisé en ce qu'**une interpolation est effectuée en vue de déterminer la valeur de compensation optimale pour les températures et/ou les tensions d'alimentation qui se trouvent entre deux valeurs de tableau.

6. Procédé selon au moins l'une des revendications précédentes, **caractérisé en ce qu'**un calcul de la moyenne entre la valeur de consigne actuelle et les valeurs de consigne précédentes est effectué afin de compenser les sauts de la valeur de consigne.

**7.** Procédé selon au moins l'une des revendications précédentes, **caractérisé en ce que** la température est déterminée indirectement par le biais du cycle opératoire réglé par le régulateur de courant.

**8.** Procédé selon la revendication 7, **caractérisé en ce que** la température est déterminée en utilisant la somme ($R_{AVG}$) de la résistance de bobine ($R_L$) et de la résistance du composant semiconducteur connecté pour attaquer la charge ($R_{DSon-LS}$).

**9.** Procédé selon la revendication 7 ou 8, **caractérisé en ce que** les cycles opératoires de plusieurs périodes PWM ($t_{PWM}$) sont moyennés pour la mesure de la température ou la détermination de la valeur de la température indirecte.

**10.** Procédé selon au moins l'une des revendications 7 à 9, **caractérisé en ce qu'**immédiatement après la mise sous tension, notamment après un redémarrage par allumage, la valeur nominale de la résistance de la bobine avec la température actuellement mesurée ou estimée du contrôleur est utilisée pour la valeur moyenne de la température ($R_{AVG}$) déterminée indirectement.

**11.** Arrangement de circuit pour commander plusieurs charges inductives comprenant un circuit de régulation PWM du courant de charge, **caractérisé en ce que** le procédé selon au moins l'une des revendications 1 à 10 est mis en oeuvre sous la forme d'un programme dans un microcalculateur ou un système de microcalculateur qui est relié électriquement avec le circuit PWM.

**12.** Arrangement de circuit pour commander plusieurs charges inductives comprenant un circuit de régulation PWM du courant de charge, notamment selon la revendication 11, **caractérisé en ce que** le procédé selon au moins l'une des revendications 1 à 10 est réalisé au moins partiellement par une logique numérique.

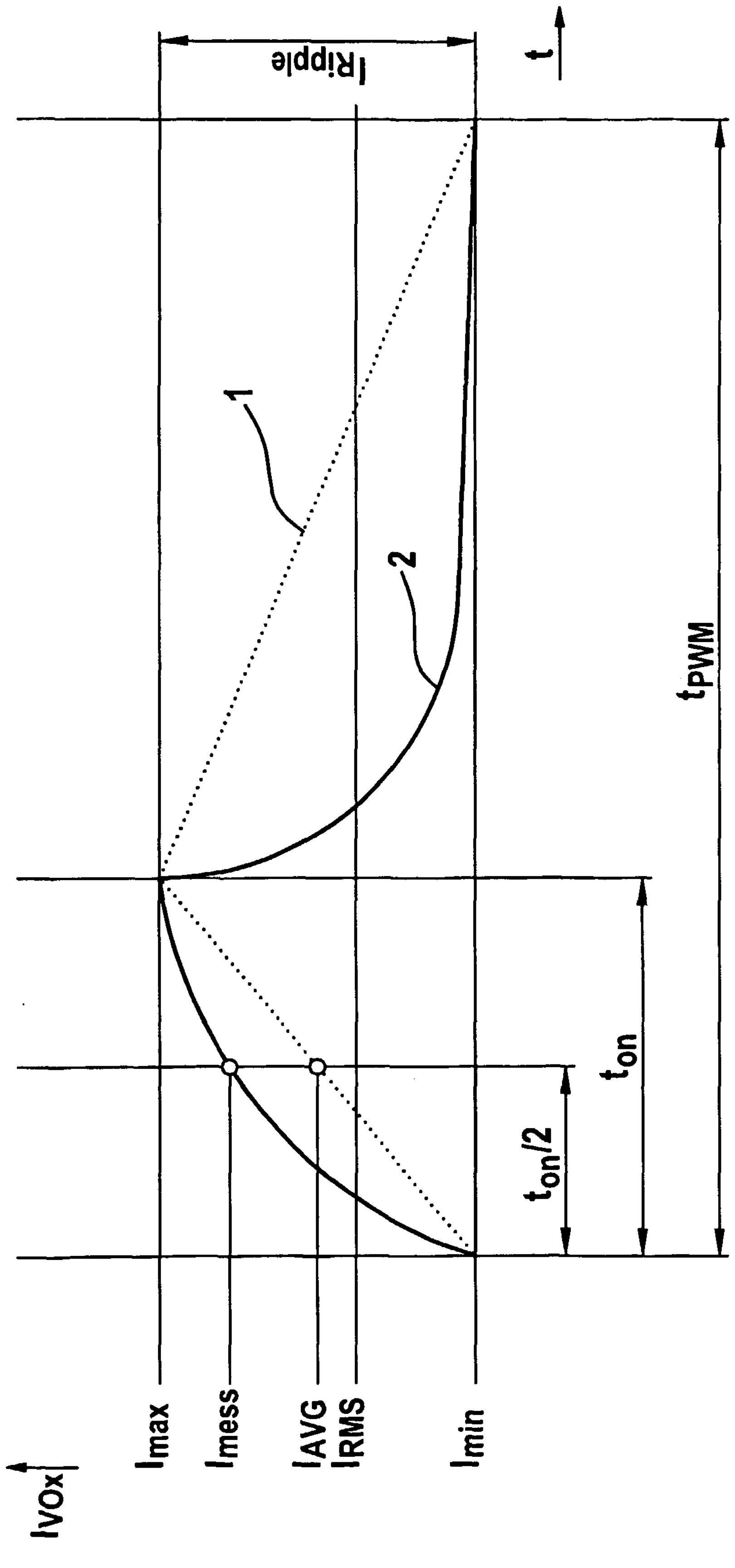


Fig. 1

Fig. 2

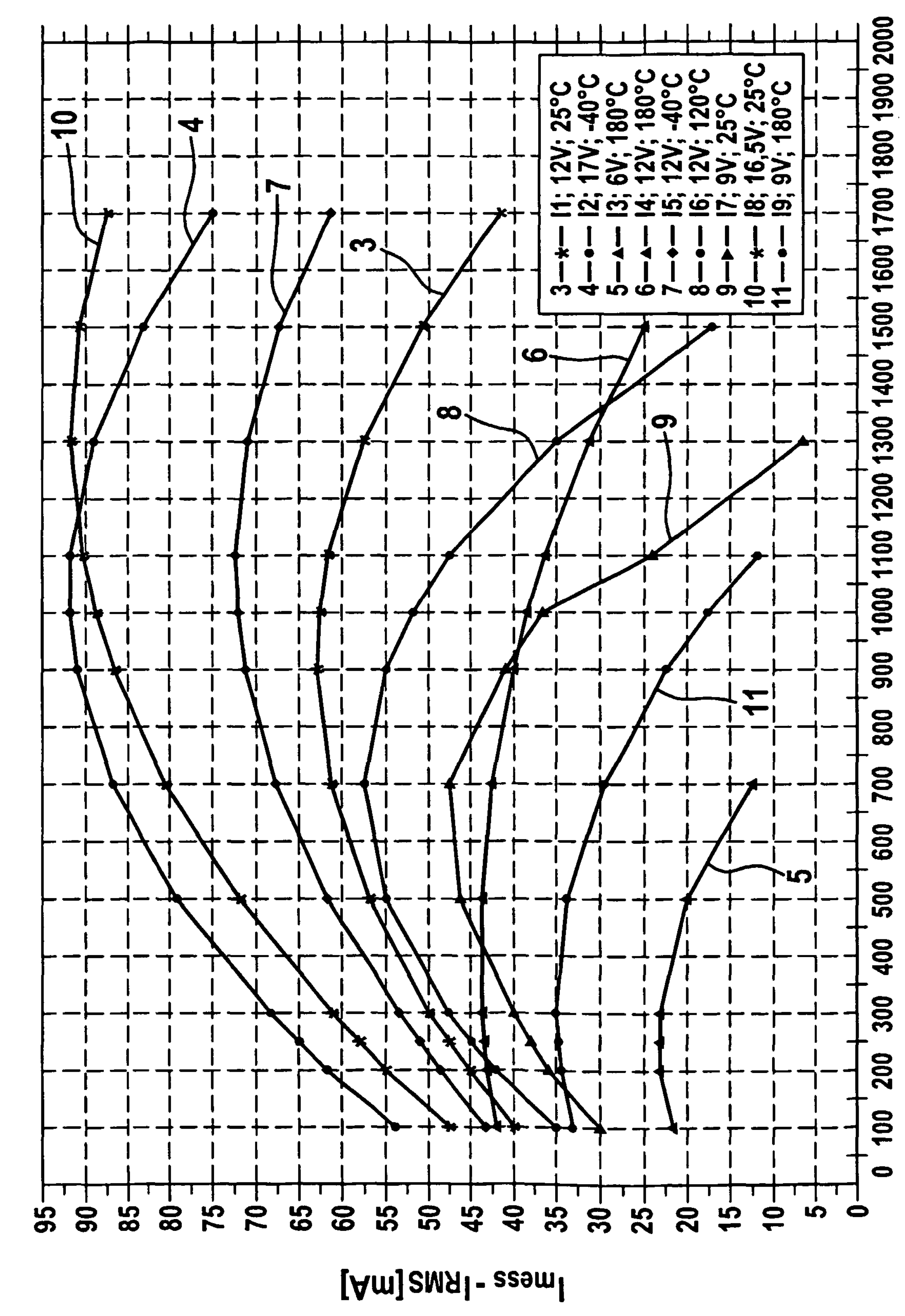
3 — I1; 12V; 25°C
4 — I2; 17V; -40°C
5 — I3; 6V; 180°C
6 — I4; 12V; 180°C
7 — I5; 12V; -40°C
8 — I6; 12V; 120°C
9 — I7; 9V; 25°C
10 — I8; 16,5V; 25°C
11 — I9; 9V; 180°C
I_soll [mA]
I_mess - I_RMS [mA]

Fig. 3

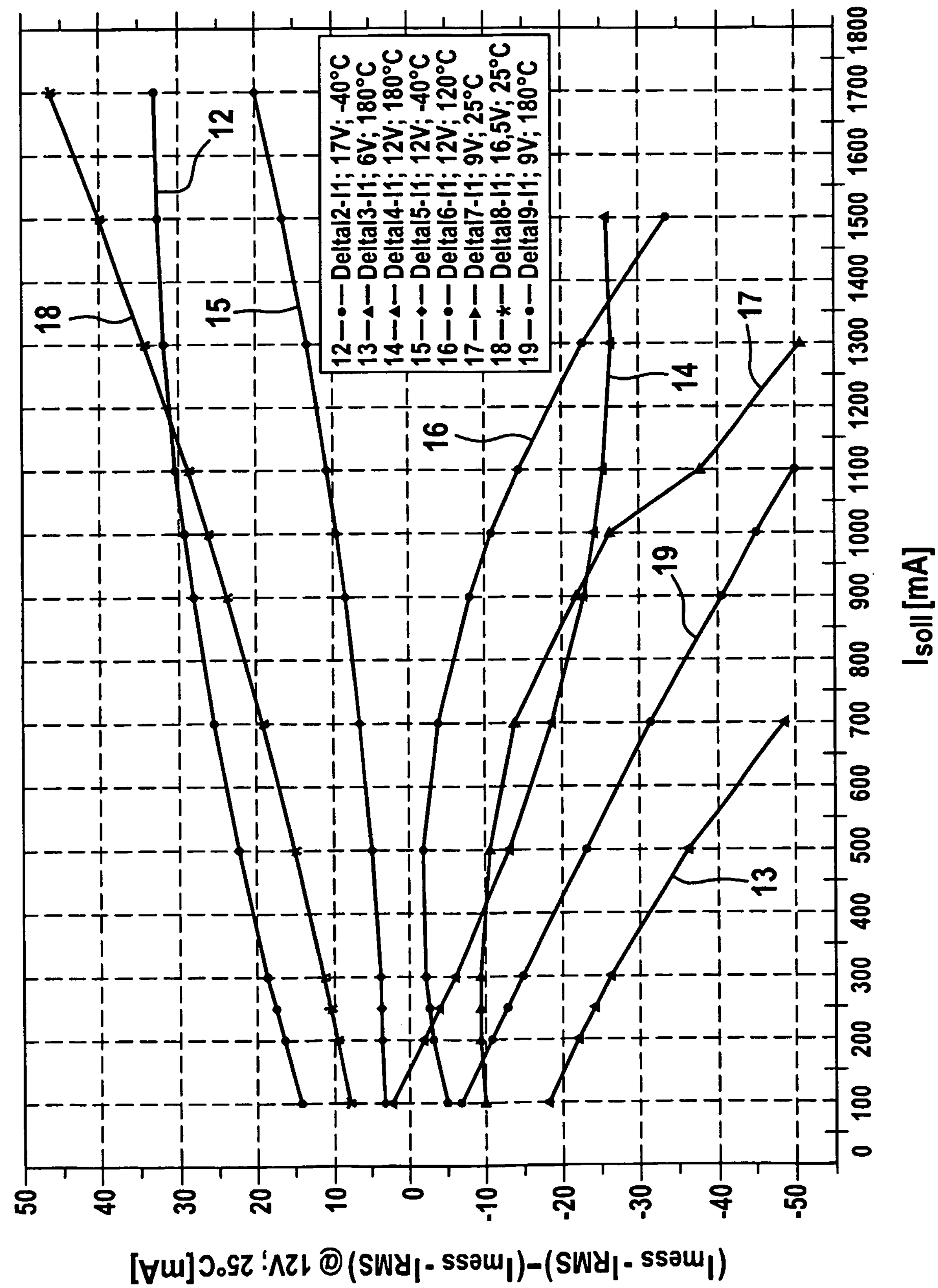
12—•— Deltal2-I1; 17V; -40°C
13—▲— Deltal3-I1; 6V; 180°C
14—▲— Deltal4-I1; 12V; 180°C
15—♦— Deltal5-I1; 12V; -40°C
16—•— Deltal6-I1; 12V; 120°C
17—▶— Deltal7-I1; 9V; 25°C
18—✱— Deltal8-I1; 16,5V; 25°C
19—•— Deltal9-I1; 9V; 180°C
(Imess - IRMS)−(Imess - IRMS) @ 12V; 25°C [mA]
Isoll [mA]
50
40
30
20
10
0
-10
-20
-30
-40
-50
0
100
200
300
400
500
600
700
800
900
1000
1100
1200
1300
1400
1500
1600
1700
1800
12
13
14
15
16
17
18
19

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0779631 A2
- EP 1065678 A1
- EP 0641700 A1
- WO 02058967 A1